# EUROPÄISCHE PATENTSCHRIFT

(11) **EP 3 713 988 B1**
(45) Veröffentlichungstag und Bekanntmachung des Hinweises auf die Patenterteilung: **08.09.2021**
(21) Anmeldenummer: 18799798.6
(22) Anmeldetag: 15.11.2018
(51) Int. Cl.: C08G 63/90

(54) **VERFAHREN ZUR REINIGUNG EINES ALIPHATISCHEN POLYESTERS**
METHOD FOR PURIFYING AN ALIPHATIC POLYESTER
PROCÉDÉ DE PURIFICATION D'UN POLYESTER ALIPHATIQUE

(30) Priorität: 20.11.2017 EP 17202538
(43) Veröffentlichungstag der Anmeldung: 30.09.2020
(73) Patentinhaber: BASF SE, 67056 Ludwigshafen am Rhein (DE)
(72) Erfinder: LEHENMEIER, Maximilian, 67056 Ludwigshafen (DE); EFFEN, Norbert, 67056 Ludwigshafen (DE); SKUPIN, Gabriel, 67056 Ludwigshafen (DE); NAEF, Rainer, 35510 Butzbach (DE)
(74) Vertreter: BASF IP Association
(86) Internationale Anmeldenummer: PCT/EP2018/081401
(87) Internationale Veröffentlichungsnummer: WO 2019/096920

(56) Entgegenhaltungen:
- EP-A1- 0 579 988
- WO-A1-03/046044
- WO-A1-2009/127556
- US-A1- 2002 052 462

## Beschreibung

Die vorliegende Erfindung betrifft ein kontinuierliches Verfahren zur Reinigung eines kettenverlängerten aliphatischen Polyesters, aufgebaut aus aliphatischen Dicarbonsäuren und aliphatischen Diolen, in einer Entgasungsanlage, dadurch gekennzeichnet, dass der Roh-Polyester in Gegenwart von 1 bis 7 Gew.-%, bezogen auf das Gesamtgewicht des Roh-Polyesters, eines Schleppmittels bei einer mittleren Verweilzeit von 3 bis 30 Minuten und einem Druck von 0,01 bis 5 mbar entgast wird.

Aus der Literatur sind Verfahren zur kontinuierlichen Herstellung von aliphatischen Polyestern wie Polybutylensuccinat (PBS), Polybutylensuccinat-coadipat (PBSA) oder Polybutylensuccinat-cosebacat (PBSSe) bekannt (s. WO-A 2009/127556 und EP-A 2228399). In diesen Schriften wird die Abreicherung von gebildetem Tetrahydrofuran und in EP-A 2228399 auch die Abreicherung an cyclischen Dimeren beschrieben. Die in diesen Schriften beschriebenen Verfahren führen jedoch nicht zu einer ausreichenden Abreicherung der cyclischen Nebenprodukte um beispielsweise eine Zulassung für den Lebensmittelkontakt nach EU 10/2011 zu erhalten.

In der EP-A 2623540 wird ein Reinigungsverfahren von aliphatischen Polyestern wie Polybutylensuccinat (PBS), Polybutylensuccinat-coadipat (PBSA) oder Polybutylensuccinat-cosebacat (PBSSe) beschrieben, bei dem cyclische Nebenprodukte mittels Extraktion mit Lösungsmitteln abgereichert werden. Der Nachteil dieses Extraktionsverfahrens ist, dass im Granulat eingeschlossene Verunreinigungen nicht abgereichert werden und es zu einer Kontamination des Polyesters mit Lösungsmitteln kommen kann. Insgesamt ist dieses Verfahren recht aufwendig und kostspielig.

Ziel der vorliegenden Erfindung war es daher, ein effizientes und prozessfähiges kontinuierliches Verfahren zur Reinigung von aliphatischen Polyestern zu finden, dass die oben beschriebenen Nachteile nicht aufweist.

Überraschenderweise wurde ein kontinuierliches Verfahren zur Reinigung eines kettenverlängerten aliphatischen Polyesters, aufgebaut aus aliphatischen Dicarbonsäuren und aliphatischen Diolen in einer Entgasungsanlage gefunden, das dadurch gekennzeichnet ist, dass der Roh-Polyester in Gegenwart von 1 bis 7 Gew.-%, bezogen auf das Gesamtgewicht des Roh-Polyesters, eines Schleppmittels 3 bis 30 Minuten bei einem Druck von 0,01 bis 5 mbar in der Entgasungsanlage entgast wird.

Die Erfindung wird im Folgenden näher beschrieben.

Die aliphatischen Polyester werden beispielsweise - wie in WO-A 2009/127556 und EP-A 2228399 beschrieben - umfassend die Stufen a) Veresterung, b) Polykondensation und c) Kettenverlängerung hergestellt.

Hierbei wird in einer Vorstufe eine Mischung aus den aliphatischen Dyhydroxyverbindungen, den aliphatischen Dicarbonsäuren und gegebenenfalls weiteren Comonomeren, vorzugsweise ohne Zugabe eines Katalysators, zu einer Paste oder Aufschlämmung vermischt und vorzugsweise auf eine Temperatur von 20 bis 90 °C gebracht oder alternativ die flüssige Mischung aus Ester der Dicarbonsäuren und Dihydroxyverbindung und gegebenenfalls weiteren Comonomeren, vorzugsweise ohne Zugabe eines Katalysators, in einen Reaktor zur Veresterung (Vorkondensation) kontinuierlich eingespeist und
a) mit der Gesamtmenge oder einer Teilmenge des Katalysators kontinuierlich verestert bzw. umgeestert und bis zu einer Viskositätszahl nach DIN 53728 von vorzugsweise 20 bis 70 cm³/g vorkondensiert;
b) das aus a) erhältliche Produkt in einem Polykondensator bis zu einer Viskositätszahl nach DIN 53728 von vorzugsweise 60 bis 170 cm³/g polykondensiert;
c) in einer weiteren Stufe kontinuierlich mit einem Kettenverlängerer C bis zu einer Viskositätszahl nach DIN 53728 von vorzugsweise 150 bis 320 cm³/g umsetzt; und
d) der aus c) erhältliche Roh-Polyester in einer dafür geeigneten Entgasungsanlage in Gegenwart von 1 bis 7 Gew.-%, bezogen auf das Gesamtgewicht des Roh-Polyesters, eines Schleppmittels bei einem Druck von 0,01 bis 5 mbar entgast wird.

Unter aliphatischen Polyestern werden solche Polyester verstanden, die überwiegend aus den Monomeren aliphatische Dicarbonsäuren und aliphatische Diole aufgebaut sind.

Als aliphatische Dicarbonäuren oder deren esterbildende Derivate kommen im Allgemeinen solche mit 2 bis 40 Kohlenstoffatomen, vorzugsweise 4 bis 14 Kohlenstoffatomen, in Betracht. Sie können vorzugsweise linear als auch verzweigt sein. Die im Rahmen der vorliegenden Erfindung verwendbaren cycloaliphatischen Dicarbonsäuren sind in der Regel solche mit 7 bis 10 Kohlenstoffatomen und insbesondere solche mit 8 Kohlenstoffatomen. Prinzipiell können jedoch auch Dicarbonsäuren mit einer größeren Anzahl an Kohlenstoffatomen, beispielsweise mit bis zu 30 Kohlenstoffatomen, eingesetzt werden.

Beispielhaft zu nennen sind: Malonsäure, Bernsteinsäure, Glutarsäure, 2-Methylglutarsäure, 3-Methylglutarsäure, Adipinsäure, Pimelinsäure, Korksäure, Azelainsäure, Sebacinsäure, Undecandisäure, Dodecandisäure, Brassylsäure, Tetradecandisäure, Fumarsäure, 2,2-Dimethylglutarsäure, Suberinsäure, Dimerfettsäure (wie z.B. Empol® 1061 der Fa. BASF SE) 1,3-Cyclopentandicarbonsäure, 1,4-Cyclohexandicarbonsäure, 1,3-Cyclohexandicarbonsäure, Diglykolsäure, Itaconsäure, Maleinsäure, Maleinsäureanhydrid und 2,5-Norbornandicarbonsäure.

Als esterbildende Derivate der oben genannten aliphatischen oder cycloaliphatischen Dicarbonsäuren, die ebenso verwendbar sind, sind insbesondere die Di-C₁- bis C₆-Alkylester, wie Dimethyl-, Diethyl-, Di-n-propyl, Di-isopropyl, Di-n-butyl, Di-iso-butyl, Di-t-butyl, Di-n-pentyl-, Di-iso-pentyl oder Di-n-hexylester zu nennen. Anhydride der Dicarbonsäuren können ebenfalls eingesetzt werden.

Dabei können die Dicarbonsäuren oder deren esterbildenden Derivate, einzeln oder als Gemisch aus zwei oder mehr davon eingesetzt werden.

Bevorzugt werden Bernsteinsäure, Adipinsäure, Azelainsäure, Sebacinsaüre, Brassylsäure oder deren jeweilige esterbildenden Derivate oder Mischungen davon eingesetzt. Besonders bevorzugt wird Bernsteinsäure, Adipinsäure oder Sebacinsäure oder deren jeweilige esterbildenden Derivate oder Mischungen davon eingesetzt. Besonders bevorzugt wird Bernsteinsäure oder Gemische von Bernsteinsäure mit vorzugsweise bis 25 mol% Adipinsäure oder vorzugsweise bis 10 mol% Sebazinsäure oder deren esterbildende Derivate, wie deren Alkylester eingesetzt.

Bernsteinsäure, Azelainsäure, Sebacinsäure und Brassylsäure haben zudem den Vorteil, dass sie als nachwachsende Rohstoffe zugänglich sind.

Im Allgemeinen werden unter aliphatischen Diolen verzweigte oder vorzugsweise lineare Alkandiolen mit 2 bis 12 Kohlenstoffatomen, bevorzugt 3 bis 6 Kohlenstoffatomen verstanden.

Beispiele geeigneter Alkandiole sind Ethylenglykol, 1,2-Propandiol, 1,3-Propandiol, 1,2-Butandiol, 1,4-Butandiol, 1,5-Pentandiol, 1,6-Hexandiol, 2,4-Dimethyl-2-ethylhexan-1,3-diol, 2,2-Dimethyl- 1,3-propandiol, 2-Ethyl-2-butyl-1,3-propandiol, 2-Ethyl-2-isobutyl- 1,3-propandiol, 2,2,4-Trimethyl-1,6-hexandiol, insbesondere Ethylenglykol, 1,3-Propandiol, 1,4-Butandiol und 2,2-Dimethyl- 1,3-propandiol (Neopentylglykol); Cyclopentandiol, 1,4-Cyclohexandiol, 1,2-Cyclohexandimethanol, 1,3-Cyclohexandi-methanol, 1,4-Cyclohexandimethanol oder 2,2,4,4-Tetramethyl-1,3-cyclobutandiol. Besonders bevorzugt sind 1,4-Butandiol. Es können auch Mischungen unterschiedlicher Alkandiole verwendet werden.

In der Regel wird in den Verfahrensstufen: Vorstufe und Veresterung a) ein Verhältnis von Komponente Diol zu Dicarbonsäure von 1,0 bis 2,5 und vorzugsweise 1,2 bis 2,2 eingestellt.

Weiterhin können die aliphatischen Polyester eine mindestens drei funktionelle Gruppen enthaltenden Verzweiger enthalten. Besonders bevorzugte Verzweiger haben drei bis sechs Hydroxylgruppen oder Carbonsäuregruppen. Beispielhaft seien genannt: Weinsäure, Zitronensäure, Äpfelsäure; Trimethylolpropan, Trimethylolethan; Pentaerythrit; Polyethertriole und Glycerin, Trimesinsäure, Trimellitsäure, Trimellitsäureanhydrid, Pyromellitsäure und Pyromellitsäuredianhydrid. Bevorzugt sind Polyole wie Trimethylolpropan, Pentaerythrit und insbesondere Glycerin. Mittels der Verzweiger lassen sich biologisch abbaubare Polyester mit einer strukturellen Viskosität aufbauen. Das rheologische Verhalten der Schmelzen verbessert sich; die Polyester lassen sich leichter verarbeiten, beispielsweise besser durch Schmelzeverfestigung zu Folien ausziehen. Die Verzweiger wirken scherentzähend, d.h. die Viskosität unter Belastung wird geringer.

Die Verzweiger werden vorzugsweise in Mengen von 0,01 bis 2, bevorzugt 0,05 bis 1, besonders bevorzugt 0,08 bis 0,20 Gew.-%, bezogen auf die Polymermenge nach Stufe a) eingesetzt.

Neben den Dicarbonsäuren und Diolen können die aliphatischen Polyester weitere der folgenden Komponenten ausgewählt aus der Gruppe bestehend aus: Dihydroxyverbindung und Hydoxycarbonsäure enthalten.

Als Dihydroxyverbindungen eignen sich Diethylenglykol, Triethylenglykol, Polyethylenglykol, Polypropylenglykol und Polytetrahydrofuran (Poly-THF), besonders bevorzugt Diethylenglykol, Triethylenglykol und Polyethylenglykol, ein, wobei man auch Mischungen davon oder Verbindungen, die unterschiedliche Variablen n aufweisen (siehe Formel I), beispielsweise Polyethylenglykol, das Propyleneinheiten (n = 3) enthält, beispielsweise erhältlich durch Polymerisation nach an sich bekannten Methoden von zuerst Ethylenoxid und anschließend mit Propylenoxid, besonders bevorzugt ein Polymer auf Basis von Polyethylenglykol, mit unterschiedlichen Variablen n, wobei Einheiten gebildet aus Ethylenoxid überwiegen. Das Molekulargewicht (Mₙ) des Polyethylenglykols wählt man in der Regel im Bereich von 250 bis 8000, bevorzugt von 600 bis 3000 g/mol.

Nach einer der bevorzugten Ausführungsformen können beispielsweise von 15 bis 98, bevorzugt 70 bis 99,5 mol-% eines Diols und 0,2 bis 85, bevorzugt 0,5 bis 30 mol-% der zuvor aufgeführten Dihydroxyverbindungen, für die Herstellung der Polyester verwendet werden.

Zur Herstellung von Polyestern kann eine Hydroxycarbonsäure eingesetzt werden wie: Glykolsäure, D-, L-, D,L-Milchsäure, 6-Hydroxyhexansäure, deren cyclische Derivate wie Glycolid (1,4-Dioxan-2,5-dion), D-, L-Dilactid (3,6-dimethyl-1,4- dioxan-2,5-dion), p-Hydroxybenzoesäure sowie deren Oligomere und Polymere wie 3-Polyhydroxybuttersäure, Polyhydroxyvaleriansäure, Polylactid (beispielsweise als Ingeo® (Fa. NatureWorks) erhältlich), besonders bevorzugt für die Herstellung von aliphatischen Polyestern sind die niedermolekularen und cyclischen Derivate davon.

Die Hydroxycarbonsäuren können beispielsweise in Mengen von 0,01 bis 50, bevorzugt von 0,1 bis 15 Gew.-% bezogen auf die Menge der Monomere verwendet werden.

Der Einsatz von Kettenverlängerern C erfolgt üblicherweise am Ende der Polykondensation in einem separaten Schritt c).

Als Komponente C1 können ein Isocyanat oder eine Mischung unterschiedlicher Isocyanate eingesetzt werden. Es können aromatische oder aliphatische Diisocyanate eingesetzt werden. Es können aber auch höher funktionelle Isocyanate verwendet werden.

Unter einem aromatischen Diisocyanat C1 werden im Rahmen der vorliegenden Erfindung vor allem Toluylen-2,4-diisocyanat, Toluylen-2,6-diisocyanat, 2,2'-Diphenylmethandiisocyanat, 2,4'-Diphenylmethandiisocyanat, 4,4'-Diphenylmethan-diisocyanat, Naphthylen-1,5-diisocyanat oder Xylylen-diisocyanat verstanden.

Darunter werden 2,2'-, 2,4'- sowie 4,4'-Diphenylmethandiisocyanat als Komponente C1 besonders bevorzugt. Im Allgemeinen werden letztere Diisocyanate als Mischung eingesetzt.

Als dreikerniges Isocyanat C1 kommt auch Tri(4-isocyanophenyl)methan in Betracht. Die mehrkernigen aromatischen Diisocyanate fallen beispielsweise bei der Herstellung von ein- oder zweikernigen Diisocyanaten an.

In untergeordneten Mengen, z.B. bis zu 5 Gew.-%, bezogen auf das Gesamtgewicht der Komponente C, kann die Komponente C auch Urethiongruppen, beispielsweise zum Verkappen der Isocyanatgruppen, enthalten.

Unter einem aliphatischen Diisocyanat C1 werden im Rahmen der vorliegenden Erfindung vor allem lineare oder verzweigte Alkylendiisocyanate oder Cycloalkylendiisocyanate mit 2 bis 20 Kohlenstoffatomen, bevorzugt 3 bis 12 Kohlenstoffatomen, z.B. 1,6-Hexamethylendiisocyanat, Isophorondiisocyanat oder Methylen-bis(4-isocyanatocyclo-hexan), verstanden. Besonders bevorzugte aliphatische Diisocyanate C sind Isophorondiisocyanat und insbesondere 1,6-Hexamethylendiisocyanat.

Zu den bevorzugten Isocyanuraten C1 zählen die aliphatischen Isocyanurate, die sich von Alkylendiisocyanaten oder Cycloalkylendiisocyanaten mit 2 bis 20 Kohlenstoffatomen, bevorzugt 3 bis 12 Kohlenstoffatomen, z.B. Isophorondiisocyanat oder Methylen-bis(4-isocyanatocyclohexan), ableiten. Dabei können die Alkylendiisocyanate sowohl linear als auch verzweigt sein. Besonders bevorzugt werden Isocyanurate, die auf n-Hexa-methylendiisocyanat basieren, beispielsweise cyclische Trimere, Pentamere oder höhere Oligomere des 1,6-Hexamethylendiisocyanats.

Im Allgemeinen kann die Komponente C1 in Mengen von 0,01 bis 4, bevorzugt 0,05 bis 2 -, besonders bevorzugt 0,2 bis 1,2 Gew.-% bezogen auf die Polymermenge nach Stufe b) eingesetzt werden.

Als di- oder oligofunktionellen Peroxide (Komponente C2) sind beispielsweise die folgenden Verbindungen geeignet: Benzoylperoxid, 1,1-Bis(t.-butylperoxy)-3,3,5-trimethylcyclohexan, 1,1-Bis(t.-butylperoxy)methylcyclododecan, n-Butyl-4,4-bis(butylperoxy)valerat, Dicumylperoxid, t.-Butylperoxybenzoat, Dibutylperoxid, α,α-Bis(t.-butylperoxy)diisopropylbenzol, 2,5-Dimethyl-2,5-di(t.-butylperoxy)hexan, 2,5-Dimethyl-2,5-di(t.-butylperoxy)hexin-3 und t.-Butylperoxycumen. Die Komponente C2 wird in 0,01 bis 4 Gew.-%, bevorzugt in 0,1 bis 2 Gew.-%, und besonders bevorzugt in 0,2 bis 1 Gew.-%, bezogen auf daden Polyester eingesetzt.

Als Komponente C3 kommen difunktionelle oder oligofunktionelle Epoxide in Frage wie: Hydrochinon, Diglycidylether, Resorcindiglycidylether, 1,6-Hexandiol-diglycidylether und hydrierter Bisphenol-A-Diglycidylether. Andere Beispiele von Epoxiden umfassen Diglycidylterephthalat, Diglycidyltetrahydrophthalat, Diglycidylhexahydrophthalat, Dimethyldiglycidylphthalat, Phenylendiglycidylether, Ethylendiglycidylether, Trimethylendiglycidylether, Tetramethylendiglycidylether, Hexamethylendiglycidylether, Sorbitoldiglycidylether, Polyglycerin-polyglycidylether, Pentaerythrit-polyglycidylether, Diglycerin-polyglycidylether, Glycerin-polyglycidylether, Trimethylolpropan-polyglycidylether, Resorcin-diglycidylether, Neopentylglycol-diglycidylether, Ethylenglycol-diglycidylether, Diethylenglycol-diglycidylether, Polyethylenglycol-diglycidylether, Propylenglycol-diglycidylether, Dipropylenglycol-diglycidylether, Polypropylenglycol-diglycidylether und Polybutylenglycol-diglycidylether.

Als Komponente C3a ist insbesondere geeignet ein Epoxidgruppen-haltiges Copolymer auf Basis Styrol, Acrylsäureester und/oder Methacrylsäureester d3a. Die Epoxidgruppen tragenden Einheiten sind vorzugsweise Glycidyl(meth)acrylate. Als vorteilhaft haben sich Copolymere mit einem Glycidylmethacrylat-Anteil von größer 20, besonders bevorzugt von größer 30 und insbesondere bevorzugt von größer 50 Gew.-% des Copolymers erwiesen. Das EpoxidÄquivalentgewicht (EEW) in diesen Polymeren beträgt vorzugsweise 150 bis 3000 und insbesondere bevorzugt 200 bis 500 g/Äquivalent. Das mittlere Molekulargewicht (Gewichtsmittel) M_{w}der Polymere beträgt vorzugsweise 2000 bis 25.000, insbesondere 3000 bis 8.000. Das mittlere Molekulargewicht (Zahlenmittel) Mₙ der Polymere beträgt vorzugsweise 400 bis 6.000, insbesondere 1000 bis 4.000. Die Polydispersität (Q) liegt im Allgemeinen zwischen 1.5 und 5. Epoxidgruppen-haltige Copolymere des obengenannten Typs werden beispielsweise von der BASF Resins B.V. unter der Marke Joncryl® ADR vertrieben. Als Kettenverlängerer besonders geeignet ist Joncryl® ADR 4368.

Die Komponente C3 wird in 0,01 bis 4 Gew.-%, bevorzugt in 0,1 bis 2 Gew.-%, und besonders bevorzugt in 0,2 bis 1 Gew.-%, bezogen auf den Polyester eingesetzt.

Als Komponente C4 kommen di- oder oligofunktionelle Oxazoline, Oxazine, Caprolactame und/oder Carbodiimide in Betracht.

Bisoxazoline sind im Allgemeinen erhältlich durch das Verfahren aus Angew. Chem. Int. Ed., Vol. 11 (1972), S. 287-288. Besonders bevorzugte Bisoxazoline und Bisoxazine sind solche, in denen das Brückenglied eine Einfachbindung, eine (CH₂)_{z}-Alkylengruppe, mit z = 2,3 oder 4 wie Methylen, Ethan-1,2-diyl, Propan-1,3-diyl, Propan-1,2-diyl, oder eine Phenylengruppe bedeutet. Als besonders bevorzugte Bisoxazoline seien 2,2'-Bis(2-oxazolin), Bis(2-oxazolinyl)methan, 1,2-Bis(2-oxazolinyl)ethan, 1,3-Bis(2-oxazolinyl)propan oder 1,4-Bis(2-oxazolinyl)butan, insbesondere 1,4-Bis(2-oxazolinyl)benzol, 1,2-Bis(2-oxazolinyl)benzol oder 1,3-Bis(2-oxazolinyl)benzol genannt. Weitere Beispiele sind: 2,2'-Bis(2-oxazolin, 2,2'-Bis(4-methyl-2-oxazolin), 2,2'-Bis(4,4'-dimethyl-2-oxazolin), 2,2'-Bis(4-ethyl-2-oxazolin), 2,2'Bbis(4,4'-diethyl-2-oxazolin), 2,2'-Bis(4-propyl-2-oxazolin), 2,2'-Bis(4-butyl-2-oxazolin), 2,2'-Bis(4-hexyl-2-oxazolin), 2,2'-Bis(4-phenyl-2-oxazolin), 2,2'-Bis(4-cyclohexyl-2-oxazolin), 2,2'-Bis(4-benzyl-2-oxazolin), 2,2'-p-Phenylen-bis(4-methyl-2-oxazolin), 2,2'-p-Phenylen-bis(4,4'dimethyl-2-oxazolin), 2,2'-m-Phenylen-bis(4-methyl-2-oxazolin), 2,2'-m-Phenylen-bis(4,4'-dimethyl-2-oxazolin), 2,2'-Hexamethylen-bis(2-oxazolin), 2,2'-Octamethylen-bis(2-oxazolin), 2,2'-Decamethylen-bis(2-oxazolin), 2,2'-Ethylenbis(4-methyl-2-oxazolin), 2,2'-Tetramethylenbis(4,4'dimethyl-2-oxazolin), 2,2'-9,9'-Diphenoxyethan-bis(2-oxazolin), 2,2'-Cyclohexylen-bis(2-oxazolin) und 2,2'-Diphenylen-bis(2-oxazolin).

Bevorzugte Bisoxazine sind 2,2'-Bis(2-oxazin), Bis(2-oxazinyl)methan, 1,2-Bis(2-oxazinyl)ethan, 1,3-Bis(2-oxazinyl)propan oder 1,4-Bis(2-oxazinyl)butan, insbesondere 1,4-Bis(2-oxazinyl)benzol, 1,2-Bis(2-oxazinyl)benzol oder 1,3-Bis(2-oxazinyl)benzol.

Carbodiimide und polymere Carbodiimide werden beispielsweise von der Fa. Lanxxess unter dem Markennamen Stabaxol® vertrieben.

Beispiele sind: N,N'-Di-2,6-diisopropylphenylcarbodiimid, N,N'-Di-o-tolylcarbodiimid, N,N'-Diphenylcarbodiimid, N,N'-Dioctyldecylcarbodiimid, N,N'-Di-2,6-dimethylphenylcarbodiimid, N-tolyl-N'-Cyclohexylcarbodiimid, N,N'-Di-2,6-di-tert.-butylphenylcarbodiimid, N-Tolyl-N'-phenylcarbodiimid, N,N'-di-p-nitrophenylcarbodiimid, N,N'-Di-p-aminophenylcarbodiimid, N,N'-Di-p-hydroxyphenylcarbodiimid, N,N'-Di-cyclohexylcarbodiimid, N,N'-Di-p-tolylcarbodiimid, p-Phenylen-bis-di-o-tolylcarbodiimid, p-Phenylen-bis-dicyclohexylcarbodiimid, Hexamethylen-bis-dicyclohexylcarbodiimid, 4,4'-Dicyclohexylmethancarbodiimid, Ethylen-bis-diphenylcarbodiimid, N,N'-Benzylcarbodiimid, N-Octadecyl-N'-phenylcarbodiimid, N-Benzyl-N'-phenylcarbodiimid, N-Octadecyl-N'-tolylcarbodiimid, N-Cyclohexyl-N'-tolylcarbodiimid, N-Phenyl-N'-tolylcarbodiimid, N-Benzyl-N'-tolylcarbodiimid, N,N'-Di-o-ethylphenylcarbodiimid, N,N'-Di-p-ethylphenylcarbodiimid, N,N'-Di-o-isopropylphenylcarbodiimid, N,N'-Di-p-isopropylphenylcarbodiimid, N,N'-Di-o-isobutylphenylcarbodiimid, N,N'-Di-p-isobutylphenylcarbodiimid, N,N'-Di-2,6-diethylphenylcarbodiimid, N,N'-Di-2-ethyl-6-isopropylphenylcarbodiimid, N,N'-Di-2-isobutyl-6-isopropylphenylcarbodiimid, N,N'-Di-2,4,6-trimethylphenylcarbodiimid, N,N'-Di-2,4,6-triisopropylphenylcarbodiimid, N,N'-Di-2,4,6-triisobutylphenylcarbodiimid, Diisopropylcarbodiimid, Dimethylcarbodiimid, Diisobutylcarbodiimid, Dioctylcarbodiimid, t-Butylisopropylcarbodiimid, Di-β-naphthylcarbodiimid und Di-t-butylcarbodiimid.

Die Komponente C4 wird in 0,01 bis 4 Gew.-%, bevorzugt in 0,1 bis 2 Gew.-%, und besonders bevorzugt in 0,2 bis 1 Gew.-%, bezogen auf den Polyester eingesetzt.

Bevorzugt sind aliphatische Polyester i die folgenden Komponenten enthalten:
i-a) 90 bis 100 mol %, bezogen auf die Komponenten i-a bis i-b, Bernsteinsäure;
i-b) 0 bis 10 mol %, bezogen auf die Komponenten i-a bis i-b, einer oder mehrerer C₆-C₂₀ Dicarbonsäuren und insbesondere bevorzugt Adipinsäure, Azelainsäure, Sebazinsäure oder Brassylsäure;
i-c) 99 bis 100 mol %, bezogen auf die Komponenten i-a bis i-b, 1,3 Propandiol oder insbesondere bevorzugt 1,4-Butandiol;
i-d) 0,1 bis 1 Gew.- %, bezogen auf die Komponenten i-a bis i-c eines Kettenverlängerers C und/oder Verzweigers.

Das erfindungsgemäße Verfahren eignet sich insbesondere zur Herstellung der aliphatischen Polyester: Polybutylenadipat (PBA), Polybutylensuccinatadipat (PBSA), Polybutylensuccinatsebacat (PBSSe), Polybutylensebacat (PBSe) und besonders bevorzugt Polybutylensuccinat (PBS). Die aliphatischen Polyester werden beispielsweise von den Firmen Showa Highpolymers unter dem Namen Bionolle und von Mitsubishi unter dem Namen GS Pla vermarktet.

Die mit dem erfindungsgemäßen Verfahren hergestellten aliphatischen Polyester weisen in der Regel Viskositätszahlen nach DIN 53728 von 150 bis 320 cm³/g und vorzugsweise 150 bis 250 cm³/g auf.

Der MVR (Schmelzvolumenrate) nach EN ISO 1133 (190°C, 2,16 kg Gewicht) liegt im Allgemeinen vor Kettenverlängerung bei 0,1 bis 150, bevorzugt bei 10 bis 150 cm³/10 min.
Die Säurezahlen nach DIN EN 12634 liegen im Allgemeinen bei 0,01 bis 1,2 mg KOH/g, vorzugsweise bei 0,1 bis 1,0 mg KOH/g und insbesondere bevorzugt bei 0,1 bis 0,7 mg KOH/g.

Die genannten aliphatischen und teilaromatischen Polyester und die erfindungsgemäßen Polyestermischungen sind biologisch abbaubar.

Im Sinne der vorliegenden Erfindung ist das Merkmal "biologisch abbaubar" für einen Stoff oder ein Stoffgemisch dann erfüllt, wenn dieser Stoff oder das Stoffgemisch entsprechend DIN EN 13432 einen prozentualen Grad des biologischen Abbaus von mindestens 90% aufweist.

Im Allgemeinen führt die biologische Abbaubarkeit dazu, dass die Polyester(mischungen) in einer angemessenen und nachweisbaren Zeitspanne zerfallen. Der Abbau kann enzymatisch, hydrolytisch, oxidativ und/oder durch Einwirkung elektromagnetischer Strahlung, beispielsweise UV-Strahlung, erfolgen und meist zum überwiegenden Teil durch die Einwirkung von Mikroorganismen wie Bakterien, Hefen, Pilzen und Algen bewirkt werden. Die biologische Abbaubarkeit lässt sich beispielsweise dadurch quantifizieren, dass Polyester mit Kompost gemischt und für eine bestimmte Zeit gelagert werden. Beispielsweise wird gemäß DIN EN 13432 CO₂-freie Luft durch gereiften Kompost während des Kompostierens strömen gelassen und dieser einem definierten Temperaturprogramm unterworfen. Hierbei wird die biologische Abbaubarkeit über das Verhältnis der Netto-CO₂-Freisetzung der Probe (nach Abzug der CO₂-Freisetzung durch den Kompost ohne Probe) zur maximalen CO₂-Freisetzung der Probe (berechnet aus dem Kohlenstoffgehalt der Probe) als prozentualer Grad des biologischen Abbaus definiert. Biologisch abbaubare Polyester(mischungen) zeigen in der Regel schon nach wenigen Tagen der Kompostierung deutliche Abbauerscheinungen wie Pilzbewuchs, Riss- und Lochbildung.

Andere Methoden zur Bestimmung der Bioabbaubarkeit werden beispielsweise in ASTM D 5338 und ASTM D 6400 beschrieben.

Die EU Verordnung 10/2011 legt Grenzwerte für Kunststoffmaterialien fest, die mit Nahrungsmitteln in Berührung stehen. Verpackungsmaterialien aus nicht aufgereinigten aliphatischen Polyestern wie Polybutylensuccinat (PBS) erfüllen die Auflagen dieser Norm nicht und kommen für Lebensmittelanwendungen daher nicht in Frage. Insbesondere die cyclischen Verunreinigungen im Polyester wie THF, cyclische Monomere, Dimere, Trimere und Tetramere können unter den verschiedenen Testbedingungen aus dem Verpackungsmaterial migrieren. Das erfindungsgemäße Verfahren liefert nunmehr aliphatische Polyester, die an cyclischen Verunreinigungen deutlich abgereichert sind und die in der EU Verordnung 10/2011 erforderlichen Grenzwerte erreichen. Dabei hat sich das erfindungsgemäße Verfahren als effizienter als die in EP-A 228399 und EP-A 2623540 beschriebenen Verfahren erwiesen.

Im Folgenden wird das erfindungsgemäße Verfahren näher beschrieben.

Die kettenverlängerten aliphatischen Polyester werden wie in der Literatur oder eingangs beschrieben hergestellt.

In der Kettenverlängerung wird der polykondensierte Polyester zusammen mit 0,01 bis 4 Gew.-%, vorzugsweise 0,1 bis 2 Gew.-% und insbesondere bevorzugt 0,5 bis 1,2 Gew.-% bezogen auf den Polyester eines Kettenverlängerers in einen Extruder, einem kontinuierlichen Kneter (List-Reaktor) oder einem statischen Mischer eingespeist. Beispielhaft seien folgende Einbauten genannt: Beim statischer Mischer können SMR, SMX, SMXL-Elemente oder Kombinationen daraus z.B. von Fa. Sulzer Chemtech AG, Schweiz eingesetzt werden. Beispiele für einen List-Reaktor sind je nach Anwendungsfeld: ein einwelliger DISCOTHERM B oder zweiwellige CRP- und ORP-Reaktoren. Als Extruder kommen Ein- oder Zweiwellenextruder in Frage.

Als Kettenverlängerer kommen die zuvor beschriebenen Isocyanate oder Isocyanurate C1, Peroxide C2 und Epoxide C3a in Frage. Beispielsweise sind dies Diisocyanate ausgewählt aus der Gruppe bestehend aus Toluylen-2,4-diisocyanat, Toluylen-2,6-diisocyanat, 4,4'- und 2,4'-Diphenylmethan-diisocyanat, Naphthylen-1,5-diisocyanat, Xylylendiisocyanat, Hexamethylendiisocyanat, Isophorondiisocyanat und Methylen-bis (4-isocyanatocyclohexan). Besonders bevorzugt ist Hexamethylendiisocyanat.

Die Kettenverlängerung erfolgt bei Reaktionstemperaturen von 220 bis 270°C, vorzugsweise 230 bis 250°C und bei Überdruck oder Normaldruck je nach verwendetem System. Es lassen sich bei Verweilzeiten von 2 bis 30 Minuten, vorzugsweise 4 bis 15 Minuten aliphatisch/aromatische Polyester mit einer Viskositäts-zahl nach DIN 53728 von 160 bis 250 cm³/g, und Säurezahlen nach DIN EN 12634 von vorzugsweise 0,5 bis 1,2 und insbesondere bevorzugt von 0,6 bis 1,0 mg KOH/g realisieren.

Der MVR (Schmelzevolumenrate) nach EN ISO 1133 (190°C, 2,16 kg Gewicht) nach Stufe c liegt im Allgemeinen bei 0,5 bis 6,0 cm³/10 min, bevorzugt bei 1,0 bis 5,0 und besonders bevorzugt bei 1,5 bis 3 cm³/10 min.

Der Reaktor, in dem die Kettenreaktion durchgeführt wird, hat die zuvor beschriebenen Einbauten, die für eine gute Durchmischung des Produktstroms sorgen.

Auf Grund des starken Viskositätsaufbaus bei der Kettenverlängerung kann es von Vorteil sein, die Kettenverlängerung im Reaktor nur soweit zu fahren bis der Kettenverlängerer zumindest mit einer funktionellen Einheit abreagiert hat. Die Vollendung des Kettenaufbaus kann beispielsweise in einem separaten Rührkessel oder in einem Rohr ohne Einbauten erfolgen. Auf diese Weise lassen sich Verstopfungen und Wandbelegungen vermeiden.

Die abreagierte Schmelze wird in der Regel direkt in die Entgasungsanlage übergeführt.

Die erfindungsgemäße Reinigung des kettenverlängerten aliphatischen Polyesters, aufgebaut aus aliphatischen Dicarbonsäuren und aliphatischen Diolen erfolgt in einer Entgasungsanlage, dadurch gekennzeichnet, dass der Roh-Polyester in Gegenwart von 1 bis 7 Gew.-%, bezogen auf das Gesamtgewicht des Roh-Polyesters, eines Schleppmittels 3 bis 30 Minuten bei einem Druck von 0,01 bis 5 mbar in der Entgasungsanlage verweilt.

In einer bevorzugten Ausführungsform des erfindungsgemäßen Verfahrens wird als Entgasungsanlage ein Dünnschichtverdampfer gewählt. Generell weist der Dünnschichtverdampfer die folgenden Charikeristika auf: Als Verdampferfläche dient ein Rohr mit einem mechanischen Rührsystem in der Mitte. Die Schmelze wird von oben auf die senkrecht stehende Verdampferfläche geleitet. Der Dünnschichtverdampfer erzeugt mit Hilfe eines Rotors mechanisch eine dünne Schicht (Schmelzeschicht) auf der Innenwand eines beheizten Außenmantels. Dabei kommt es zu einer ständigen Oberflächenerneuerung, was einen guten Stoffaustausch und somit hohe Entgasungsleistung bedeutet. Die Entgasungsleistung wird durch Zugabe eines Strippmittels (z.B. Wasser oder Wasserdampf) erreicht, das im Gegenstromprinzip zugeführt wird. Weiterhin ist für eine gute Entgasungsleistung ein Vakuum von kleiner/gleich 5 mbar notwendig.

Die Form und Anordnung der einzelnen Rotorblätter ermöglicht den Transport des viskosen Produktes zum Austrag des Prozessors. Dabei hängt die Filmdicke und die Schmelzeförderung ebenfalls von der Geometrie der Rotorblätter ab. Das große freie Gasvolumen erlaubt ein hohes Eindampfverhältnis in einer Stufe ohne die Gefahr von Produktmitriss in das Kondensationssystem.

In der Entgasungsanlage gelten die folgenden Bedingungen: die mittleren Verweilzeiten in der Entgasungsanlage liegen bei 3 bis 30 Minuten - längere Verweilzeiten würden zum verstärkten Abbau des polykondensierten Polyesters führen, bei kürzeren Verweilzeiten ist die Abreicherung der cyclischen Oligomere nicht ausreichend genug.

Auch kann es von Vorteil sein, den Reaktionskatalysator durch Zugabe einmaliger oder weiterer Mengen der zuvor beschriebenen Deaktivatoren wie beispielsweise phosphorige Säure in seiner Aktivität zu reduzieren.

Die Temperaturen in der Entgasungsanlage betragen in der Regel 180 bis 260°C und vorzugsweise 200 bis 240°C.

Das Schleppmittel wird vorzugsweise in den Gasraum der Entgasungsanlage eingespeist. Das hat den Vorteil, dass es zur Ausbildung eines homogenen Polyesterfilms in der Entgasungsanlage kommt und beispielsweise Blasenbildung oder Schaumbildung im Polyesterfilm vermieden werden.

Als Schleppmittel kommen wie zuvor beschrieben Wasser, Ethanol, Stickstoff, Kohlendioxid, Aceton und cyclisches Polypropylencarbonat in Frage. Besonders geeignet ist Wasser, das in den Gasraum der Entgasungsanlage als Wasserdampf eingespeist wird.

Die Menge des Schleppmittes beträgt in der Regel zwischen 1 und 7, vorzugsweise 2 bis 5 Gew.-% bezogen auf den Polyester am Ende der Stufe b). Höhere Mengen an Schleppmittel führen zu einer nicht akzeptablen Verschlechterung des in der Entgasungsanlage herrschenden Vakuums. Bei einer geringeren Schleppmitelkonzentration fällt die Abreicherung des Roh-Polyesters an cyclischen Verunreinigungen wie THF und cyclischen Monomeren, Dimeren, Trimeren und Tetrameren des Polyesters als zu gering aus.

In der Entgasungsanlage bildet die Polymerschmelze in der Regel eine mittlere Schichtdicke (Film) von kleiner 5 mm, vorzugsweise kleiner 2 mm und insbesondere bevorzugt kleiner 1 mm auf.

Als Entgasungsanlage kommen neben dem bevorzugten Dünnschichtverdampfer ein Scheibenreaktor, Käfigreaktor, Fallfilmverdampfer oder Planetwalzenextruder in Frage.

In der WO 2014/195176 ist ein Verfahren bei aromatischen und aliphatisch-aromatischen Polyestern beschrieben, deren Emmission an TOC (total organic carbon - wie beispielsweise THF) drastisch zu reduzieren. Wir haben gefunden, dass dies bei aliphatischen Polyestern wie PBS ebenfalls möglich ist, wenn vor Einspeisung in eine Entgasungsanlage B' der Roh-polyester mit 0,01 bis 2 Gew.-% des in WO 2014/195176 beschriebenen Acrylsäurepolymeren aufgebaut aus aufgebaut aus a) 70 bis 100 Gew.-% Acrylsäure und b) 0 bis 30 Gew.-% mindestens eines anderen mit Acrylsäure copolymerisierbaren ethylenischen ungesättigten Monomeren, ausgewählt aus der Gruppe der monoethethylenisch ungesättigten Carbonsäuren, eingespeist wird.

Die mit dem erfindungsgemäßen Verfahren zugänglichen aliphatischen Polyester wie beispielsweise PBS kommen für zahlreiche Anwendungen wie Spritzguss-Produkte, Thermoform-Produkte, Filme oder Schäume in Frage. Dabei werden die aliphatischen Polyester häufig in Mischungen mit weiteren Biopolymeren wie Polymilchsäure, Polyhydroxyalkanoaten, biologisch-abbaubare aliphatisch-aromatischen Polyestern, Stärke, mineralischen Füllstoffen oder anderen Additiven wie beispielsweise Gleitmittel, Nukeierungsmitteln, Weichmachern oder Pigmenten eingesetzt.

Im erfindungsgemäßen Verfahren lassen sich die cyclischen Verunreinigungen deutlich abreichern. In der Regel läßt sich bei 1,4-Butandiol-haltigen Polyestern der Rest THF-Gehalt des aliphatischen Polyesters auf die Hälfte oder vorzugsweise auf ein Viertel und insbesondere bevorzugt auf ein Zehntel des ursprünglichen THF-Gehalts reduzieren. In der Regel weist der gereinigte aliphatische Polyester einen Rest-THF-Gehalt von kleiner 50 ppm, vorzugsweise kleiner 30 und insbesondere bevorzugt kleiner 10 ppm auf.

Auch der Gehalt an cyclischen Oligomeren des aliphatischen Polyesters läßt sich deutlich senken. Beim PBS beispielsweise wird durch das erfindungsgemäße Verfahren der Gehalt an cyclischem Monomer und cyclischem Dimer um in der Regel größer 30 %, vorzugsweise größer 40 % und insbesondere größer 50 % abgesenkt. Gerade diese beiden cyclischen Oligomere migrieren in einer aus dem aliphatschen Polyester hergestelltem Bauteil wie einem Film stärker als die entsprechend höheren Oligomere. Die störenden cyclischen Monomere und Dimere des PBS können auf im Allgemeinen unter 0,8 Gew.-% vorzugsweise unter 0,7 Gew.-% und insbesondere bevorzugt unter 0,6 Gew.-% des Polyesters reduziert werden. Durch die effiziente Abreicherung der cyclischen Monomeren und Dimeren im erfindungsgemäßen Verfahren kann eine Zulassung für den Lebensmittelkontakt nach EU 10/2011 erhalten werden.

Zur Herstellung dieser Polyestermischungen oder Polyesterformulierungen hat es sich als vorteilhaft erwiesen, wenn der an cyclischen Verunreinigungen abgereicherte kettenverlängerte, aliphatische Polyester nach der Entgasungsanlage ohne Zwischenisolierung wie beispielsweise einer Unterwassergranulierung - kontinuierlich in die Compoundierung mit weiteren Polymeren und Hilfsstoffen eingespeist wird. Neben der Kosteneinsparung durch Weglassen des Granulierschritts muß der aliphatische Polyester nicht aufgeschmolen werden. Die durch die thermische Belastung mögliche erneute Bildung von cyclischen Verunreinigungen kann somit unterbunden werden.

Mit dem erfindungsgemäßen Verfahren lassen sich prozessfähig und effizient kettenverlängerte, aliphatische Polyester herstellen, die zudem arm an cyclischen Verunreinigungen sind.

### Messmethoden:

Die Bestimmung der Viskositätszahl erfolgt nach DIN 53728 Teil 3, 3. Januar 1985. Als Lösungsmittel wurde das Gemisch: Phenol/Dichlorbenzol im Gewichtsverhältnis 50/50 verwendet.

Die Bestimmung der Schmelze-Volumenfließrate (MVR) erfolgte nach ISO 1133. Die Prüfbedingungen betrugen 190°C, 2,16 kg. Die Aufschmelzzeit betrug 4 Minuten. Der MVR gibt die Geschwindigkeit der Extrusion eines geschmolzenen Kunststoff-Formteils durch ein Extrusionswerkzeug von festgelegter Länge und festgelegtem Durchmesser unter den vorbeschriebenen Bedingungen: Temperatur, Belastung und Lage des Kolbens. Bestimmt wird das in einer festgelegten Zeit extrudierte Volumen im Zylinder eines Extrusionsplastometers.

### Anwendungstechnische Messungen:

Die Molekulargewichte Mn und Mw der teilaromatischen Polyester wurde gemäß DIN 55672-1 mittels SEC bestimmt: Elutionsmittel Hexafluoroisopropanol (HFIP) + 0,05 Gew.-% Trifluoroessigsäure-Ka-Salz; Die Kalibrierung erfolgte mit eng verteilten Polymethylmethacrylat-Standards. Die Auswertung musste nach 18,83 mL (ca. M= 300 g/mol) abgebrochen werden, da für kleinere Molmassen das Chromatogramm durch Verunreinigungen der Probe, bzw. des SEC-Elutionsmittels, gestört wird.

Schmelzvolumenrate MVR bei 190° C und 2.16 kg nach ISO 1133-1 DE Die Oligomere wurden mittels Gaschromatographie gekoppelt mit Massenspektroskopie (GC-MS) charakterisiert. 24.41 mg Probe wurde in 1.2ml Dichlormethan gelöst. Die Ampulle wurde 30 Minuten auf den Rollenmischer gelegt. Die Ionisation erfolgte durch positive Ionen, chemische Ionisation und Elektronenstoßionisation. Die Auflösung erfolgt über Einzelauflösung.

### Ausgangsstoffe

1,4-Butandiol der Fa. BASF SE, Bernsteinsäure der Fa. DMS N.V. und Titanorthotitanat von Sigma Aldrich.

### Polyester i:

i-1 Polybutylensuccinat: 82,0 g 1,4-Butandiol, 82,7 g Bernsteinsäure, 0,09 g Glycerin und 0,13 g Titanorthotitanat wurden vorgelegt und bei 120 °C aufgeschmolzen. Anschließend wurde die Temperatur auf 160 °C erhöht und Wasser abdestilliert. Danach wurde Vakuum angelegt und die Temperatur auf 250 °C erhöht und die Polykondensation bis zur gewünschten Viskositätszahl fertiggestellt. Anschließend wurde die Temperatur auf 220 °C erniedrigt und das Polymer durch Zugabe von 1,2 g Hexamethylendiisocyanat fertiggestellt. Die Oligomerenanteil betrug nach GPC 1,34 wt-%.

### Durchführung der Entgasung in Schmelze

Das Polyestergranulat wurde mit Hilfe eines Kneters kontinuierlich aufgeschmolzen, wobei die Schmelzetemperatur am Austritt des Kneters ca 200°C-220°C betrug. Die notwendige Aufschmelzenergie wurde dabei über die Heizbänder des Zylinders und über Scherung (Drehzahl des Kneters) dem Material zugeführt. Alternativ konnte der Polyester auch mit einem Ein- oder Doppelschneckenextruder aufgeschmolzen werden, um dann dem vertikal stehenden Dünnschichtverdampfer über eine beheizte Rohrleitung mit einer Schmelzepumpe von oben (seitlich) zugeführt zu werden. Der Durchsatz lag bei den Versuchen zwischen 15 und 40 kg/h.

Im Dünnschichtverdampfer (Filmtruder) wurde die Schmelze mit Hilfe eines Rotors und der entsprechenden Flügelgeometrien zu einem dünnen Film mit einer Dicke von ca. 1 mm ausgezogen und nach unten transportiert. Dabei war der äußere Mantel des Verdampfers beheizt (200 - 280°C) und die Verweilzeit im Dünnschichtverdampfer wurde über die Rotordrehzahl bestimmt/variiert.

Gleichzeitig konnte von unten im Gegenstrom ein Schleppmittel zugeführt werden und zur besseren Entgasung wurde ein Vakuum angelegt. Sobald die Schmelze im unteren Teil des Dünnschichtverdampfers angekommen war, wurde sie mit Hilfe einer Schmelzepumpe kontinuierlich ausgetragen und über eine Düsenplatte zu Strängen ausgezogen. Diese wurden in einem Wasserbad abgekühlt und einem Granulator zugeführt, um dann wieder Granulat zu erhalten. Alternativ zu der Stranggranulierung konnte auch eine Unterwassergranulierung nach der Schmelzeaustragspumpe eingestzt werden.

Die Oligomere wurden im oberen Bereich des Dünnschichtverdampfers mit Vakuum abgezogen und anschließend kondensiert.

**Tabelle 1**

| Beispiel | | V1 | 2 | V3 | V4 |
|---|---|---|---|---|---|
| | Einheit | | | | |
| Temperatur (Kneter) | °C | 200 | 200 | 200 | 200 |
| Temperatur (Dünnschichtverd.) | °C | 226 | 227 | 221 | 250 |
| Temperatur (Wasserdampf) | °C | 100 | 100 | 100 | 100 |
| Durchsatz | Kg/h | 20 | 20 | 20 | 20 |
| Mittlere Verweilzeit | min | 15 | 15 | 15 | 15 |
| Filmdicke | mm | 1,3 | 1,3 | 1,3 | 1,3 |
| Vakuum | mbar | 0,5 | 3,1 | 3,8 | 15,7 |
| Strippmedium | | - | H₂O (d) | - | H₂O (d) |
| Menge | | - | 1 wt-% | - | 1 wt-% |
| Drehzahl | rpm | 291 | 291 | 290 | 350 |

| Oligomeranteil | | | | | |
|---|---|---|---|---|---|
| Start | | | | | |
| <1000 Da | wt-% | 1,34 | 1,34 | 1,34 | 1,34 |
| Ende | | | | | |
| <1000 Da | wt-% | 1,21 | 0,94 | 1,43 | 1,38 |
| THF | | | | | |
| Start | ppm | 420 | 420 | 420 | 420 |
| Ende | ppm | 50 | 10 | 110 | 280 |

## Patentansprüche

1. Kontinuierliches Verfahren zur Reinigung eines kettenverlängerten aliphatischen Polyesters, aufgebaut aus aliphatischen Dicarbonsäuren und aliphatischen Diolen, in einer Entgasungsanlage, **dadurch gekennzeichnet, dass** der Roh-Polyester in Gegenwart von 1 bis 7 Gew.-%, bezogen auf das Gesamtgewicht des Roh-Polyesters, eines Schleppmittels bei einer mittleren Verweilzeit von 3 bis 30 Minuten und einem Druck von 0,01 bis 5 mbar entgast wird.

2. Verfahren nach Anspruch 1, **dadurch gekennzeichnet, dass** das Schleppmittel in den Gasraum der Entgasungsanlage eingespeist wird.

3. Verfahren nach Anspruch 1 oder 2, **dadurch gekennzeichnet, dass** das Schleppmittel ausgewählt ist aus der Gruppe bestehend aus: zusätzlich eingespeistem Wasser, Ethanol, Stickstoff, Kohlendioxid, Aceton, und cyclisches Propylencarbonat.

4. Verfahren nach einem der Ansprüche 1 bis 3, **dadurch gekennzeichnet, dass** die Entgasungsanlage ein Dünnschichtverdampfer ist.

5. Verfahren nach einem der Ansprüche 1 bis 4, **dadurch gekennzeichnet, dass** die Entgasungsanlage eine Innentemperatur von 180 bis 260°C und bevorzugt 200 °C bis 240°C aufweist.

6. Verfahren nach einem der Ansprüche 1 bis 5, **dadurch gekennzeichnet, dass** der Roh-Polyester in der Entgasungsanlage eine Schichtdicke von kleiner 2 mm und bevorzugt kleiner 1 mm aufweist.

7. Verfahren nach einem der Ansprüche 1 bis 6, **dadurch gekennzeichnet, dass** der aliphatische Polyester das aliphatische Diol 1,4-Butandiol enthält.

8. Verfahren nach einem der Ansprüche 1 bis 6, **dadurch gekennzeichnet, dass** der aliphatische Polyester ein Polybutylensuccinat ist.

9. Verfahren nach einem der Ansprüche 1 bis 8, **dadurch gekennzeichnet, dass** der Roh-Polyester einen MVR nach DIN EN 1133-1 vom 01.03.2012 (190°C, 2,16 kg) von 0,5 bis 50 cm³/10 min aufweist.

10. Verfahren nach Anspruch 7, **dadurch gekennzeichnet, dass** der Roh-polyester mit 0,01 bis 2 Gew.-% eines Acrylsäurepolymers, aufgebaut aus a) 70 bis 100 Gew.-% Acrylsäure und b) 0 bis 30 Gew.-% mindestens eines anderen mit Acrylsäure copolymerisierbaren ethylenischen ungesättigten Monomeren, ausgewählt aus der Gruppe der monoethethylenisch ungesättigten Carbonsäuren, gemischt wird bevor er in die Entgasungsanlage eingespeist wird.

11. Verfahren nach einem der Ansprüche 1 bis 10, **dadurch gekennzeichnet, dass** der aus der Entgasungsanlage gereinigte Polyester ohne Granulierungsschritt in die Compoundierung mit weiteren Polymeren und Hilfsstoffen eingespeist wird.

## Claims

1. A continuous process for purifying a chain-extended aliphatic polyester constructed from aliphatic dicarboxylic acids and aliphatic diols in a degassing apparatus, wherein the crude polyester is degassed with an average residence time of 3 to 30 minutes and at a pressure of 0.01 to 5 mbar in the presence of 1% to 7% by weight, based on the total weight of the crude polyester, of an entraining agent.

2. The process according to claim 1, wherein the entraining agent is introduced into the gas space of the degassing apparatus.

3. The process according to claim 1 or 2, wherein the entraining agent is selected from the group consisting of: additionally introduced water, ethanol, nitrogen, carbon dioxide, acetone and cyclic propylene carbonate.

4. The process according to any of claims 1 to 3, wherein the degassing apparatus is a thin film evaporator.

5. The process according to any of claims 1 to 4, wherein the degassing apparatus has an internal temperature of 180°C to 260°C and preferably 200°C to 240°C.

6. The process according to any of claims 1 to 5, wherein the crude polyester in the degassing apparatus has a film thickness of less than 2 mm and preferably less than 1 mm.

7. The process according to any of claims 1 to 6, wherein the aliphatic polyester comprises the aliphatic diol 1,4-butanediol.

8. The process according to any of claims 1 to 6, wherein the aliphatic polyester is a polybutylene succinate.

9. The process according to any of claims 1 to 8, wherein the crude polyester has an MVR according to DIN EN 1133-1 of 01.03.2012 (190°C, 2.16 kg) of 0.5 to 50 cm³/10 min.

10. The process according to claim 7, wherein before introduction into the degassing apparatus the crude polyester is mixed with 0.01% to 2% by weight of an acrylic acid polymer constructed from: a) 70% to 100% by weight of acrylic acid and b) 0% to 30% by weight of at least one other ethylenically unsaturated monomer copolymerizable with acrylic acid and selected from the group of monoethylenically unsaturated carboxylic acids.

11. The process according to any of claims 1 to 10, wherein the polyester purified from the degassing apparatus is sent for compounding with further polymers and auxiliaries without a granulation step.

## Revendications

1. Procédé continu pour la purification d'un polyester aliphatique à extension de chaîne, construit à partir d'acides dicarboxyliques et de diols aliphatiques, dans une unité de dégazage, **caractérisé en ce que** le polyester brut est dégazé en un temps de séjour moyen de 3 à 30 minutes et sous une pression de 0,01 à 5 mbars, en présence de 1 à 7 % en poids, par rapport au poids total du polyester brut, d'un agent d'entraînement.

2. Procédé selon la revendication 1, **caractérisé en ce que** l'agent d'entraînement est introduit dans l'atmosphère de l'unité de dégazage.

3. Procédé selon la revendication 1 ou 2, **caractérisé en ce que** l'agent d'entraînement est choisi dans le groupe constitué par : de l'eau introduite additionnellement, l'éthanol, l'azote, le dioxyde de carbone, l'acétone et le carbonate de propylène cyclique.

4. Procédé selon l'une quelconque des revendications 1 à 3, **caractérisé en ce que** l'unité de dégazage est un évaporateur à couche mince.

5. Procédé selon l'une quelconque des revendications 1 à 4, **caractérisé en ce que** l'unité de dégazage présente une température interne de 180 à 260 °C et de préférence de 200 °C à 240 °C.

6. Procédé selon l'une quelconque des revendications 1 à 5, **caractérisé en ce que caractérisé en ce que** le polyester brut présente dans l'unité de dégazage une épaisseur de couche inférieure à 2 mm et de préférence inférieure à 1 mm.

7. Procédé selon l'une quelconque des revendications 1 à 6, **caractérisé en ce que** le polyester aliphatique contient le diol aliphatique 1,4-butanediol.

8. Procédé selon l'une quelconque des revendications 1 à 6, **caractérisé en ce que** le polyester aliphatique est un poly(butylène succinate).

9. Procédé selon l'une quelconque des revendications 1 à 8, **caractérisé en ce que** le polyester brut présente un MVR selon DIN EN 1133-1 du 01.03.2012 (190 °C, 2,16 kg) de 0,5 à 50 cm³/10 min.

10. Procédé selon la revendication 7, **caractérisé en ce qu'**avant de l'introduire dans l'unité de dégazage on mélange le polyester brut avec 0,01 à 2 % en poids d'un polymère d'acide acrylique, construit à partir de a) 70 à 100 % en poids d'acide acrylique et b) 0 à 30 % en poids d'au moins un autre monomère à insaturation éthylénique copolymérisable avec l'acide acrylique, choisi dans le groupe des acides carboxyliques à insaturation monoéthylénique.

11. Procédé selon l'une quelconque des revendications 1 à 10, **caractérisé en ce que** le polyester purifié provenant de l'unité de dégazage est introduit sans étape de granulation dans le compoundage avec d'autres polymères et des adjuvants.
